# EUROPÄISCHE PATENTANMELDUNG

(11) **EP 1 857 903 A2**
(43) Veröffentlichungstag der Anmeldung: **21.11.2007**
(21) Anmeldenummer: 07008195.5
(22) Anmeldetag: 23.04.2007
(51) Int. Cl.: G05B 19/418, B65G 43/00

(54) **Steuerbaustein für Fördereinrichtungen eines modular aufgebauten Fördersystems**

(30) Priorität: 19.05.2006 DE 102006023921
(71) Anmelder: Phoenix Contact GmbH & Co. KG, 32825 Blomberg (DE)
(72) Erfinder: Hildebrandt, Thomas, 31542 Bad Nenndorf (DE)
(74) Vertreter: Kampfenkel, Klaus

(57) **Zusammenfassung**

Die Erfindung betrifft ein Fördersystem, welches eine Förderstrecke aus wenigstens zwei aufeinanderfolgend angeordneten Fördereinrichtungen zum aktiven Fördern von passivem Fördergut entlang der Förderstrecke aufweist, wobei jede der Fördereinrichtungen wenigstens zwei relativ zueinander bewegliche Teileinheiten umfasst und wobei jeweils eine der Teileinheiten ortsfest montiert ist und jeweils ein Antrieb zum Bewegen der wenigstens einen weiteren Teileinheit vorgesehen ist. Das Fördersystem umfasst ferner eine mit den Fördereinrichtungen in Verbindung stehende Steuerungseinrichtung zum Steuern der Fördereinrichtungen in Abhängigkeit von entlang der Förderstrecke zu förderndem Fördergut, wobei die Steuerungseinrichtung zum Steuern jeder Fördereinrichtung einen dieser Fördereinrichtung zugeordneten und mit dieser in Verbindung stehenden Steuerbaustein umfasst, der mit wenigstens einem weiteren Steuerbaustein zum Datenaustausch verschaltet ist, welcher einer unmittelbar vorausgehenden oder unmittelbar nachgehenden Fördereinrichtung zugeordnet ist. Jeder Steuerbaustein weist ferner eine Standardschnittstelle mit einer Anzahl von vordefinierten Schnittstellenpositionen auf, wobei die Schnittstellenpositionen einer Datenverarbeitung des Steuerbausteins zur Steuerung einer Fördereinrichtung fest zugeordnet sind, und wobei die Zuordnung zwischen einem Steuerbaustein und einer spezifischen Fördereinrichtung durch Übergabe eines fördereinrichtungspezifischen Parametersatzes an den Steuerbaustein erfolgt.

## Beschreibung

Die Erfindung betrifft ein Fördersystem zum Fördern von passivem Fördergut entlang einer Förderstrecke mit wenigstens zwei aufeinanderfolgend angeordneten Fördereinrichtungen, bei welchem jeder der Fördereinrichtungen zur Ansteuerung ein Steuerbaustein zugeordnet ist nach dem Oberbegriff des Anspruchs 1 sowie einen für ein derartiges Fördersystem angepassten Steuerbaustein nach dem Oberbegriff des Anspruchs 10.

In der Automobilindustrie, um ein beispielhaftes Anwendungsgebiet zu benennen, gibt es viele fördertechnische Anlagen und Systeme. Die den Fördersystemen zugrunde liegende Fördertechnik kann hierbei generell in zwei grundsätzliche Kategorien unterschieden werden.

Die Fördertechnik im Rahmen einer Anlagenfördertechnik bildet häufig nur einen untergeordneten Teil der Automatisierung. Die Anlagen, im Karosseriebau häufig vollautomatisierte Schweiß- und Klebeanlagen, fertigen das Fahrzeug und die Anlagenfördertechnik hat die Aufgabe, das im Entstehen befindliche Produkt, wie z.B. ein Fahrzeug, von einer Fertigungszelle zur nächsten zu befördern. Hier ist die Fördertechnik also nur ein kleiner Teil des Ganzen, einen großen Teil bilden die Roboter mit ihren Schweißzangen und Greifern und den dazu gehörenden Technologiesteuerungen.

Nach dem Durchlaufen durch eine Fertigungslinie, beispielsweise aus fünf hintereinander liegenden Fertigungszellen á 4 Roboter, wird z.B. das Fahrzeug über einen Heber einer verbindenden Fördertechnik zugeführt. Diese befördert es dann zur nächsten Fertigungslinie. Diese kann sich in unmittelbarer Nachbarschaft befinden, sie kann aber auch Hunderte Meter und mehr weiter weg sein, z. B. in einer anderen Halle. Diese verbindende Fördertechnik befindet sich üblicherweise oberhalb oder abseits der Fertigungsstraßen und ist menschenleer. Hier bildet die Fördertechnik die einzige Automatisierungstechnik, die ferner noch komplexer als die Anlagenfördertechnik ist, da Fördergut, wie z.B. Karossenteile oder auch fertige Karossen, transportiert, gedreht, sortiert, gepuffert usw. werden müssen.

Technologisch betrachtet, können als Beispiele derartiger Fördersysteme die Skidfördertechnik, bei welcher das Fördergut auf sogenannten Skids oder auch Schlitten steht, die gefördert werden, die Elektrohängebahn (EHB), wobei intelligente Fahrzeuge hängend ein Stromschienensystem nutzen, oder Schubplattformen, die häufig in der Endmontage genutzt werden, wenn die Fahrzeug bereits auf eigenen Rädern stehen, genannt werden.

Fördersysteme, welche die Skidfördertechnik oder allgemein eine Fördertechnik einsetzen, bei denen jeweilige Fördereinrichtungen fest montiert sind und aktiv fördern, während das Fördergut, wie z. B. Skid mit Ladung, passiv bleibt und keinerlei Antrieb oder Intelligenz besitzt, besitzen üblicherweise eine anwendungsspezifisch und modular aus einer Anzahl von einzelnen Fördereinrichtungen aufgebaute Förderstrecke. Zur Steuerung derartiger Fördersysteme, werden diese grundsätzlich wieder zunächst in jeweilige zu steuernde, jeweils eine Fördereinrichtung umfassende Einzelsegmente aufgeteilt, wobei es bei der Steuerung für im Wesentlichen jedes dieser Einzelsegmente zusätzlich einen Vorgänger und einen Nachfolger zu berücksichtigen gilt. Ferner gibt es eine Vielzahl von unterschiedlichen Fördereinrichtungen, wie z.B. einfache Rollenbahnen, Hubtische, Schwenktische, Drehtische, etc., die alle spezielle Funktionen innerhalb des Fördersystems wahrnehmen.

Auch ohne Berücksichtigung von jeweiligen Vorgängern und Nachfolgern und der Vielzahl von unterschiedlichen Fördereinrichtungen gibt es bereits für eine einzelne, äußerst einfache Fördereinrichtung, die Rollenbahn, auf die Elektrik bezogen eine Vielzahl von verschiedenen Hardwareausführungen.

Eine solche einzelne Fördereinrichtung kann sich spezifisch z.B. auszeichnen durch eine Förderrichtung mit einem Endlageninitiator, eine Förderrichtung mit zwei redundanten Endlageninitiatoren, eine Förderrichtung mit einem Endlageninitiator und einem Initiator für eine Schnell/Langsam-Umschaltung, eine Förderrichtung mit zwei redundanten Endlageninitiatoren und zwei redundanten Initiatoren für eine Schnell/Langsam-Umschaltung, zwei Förderrichtungen mit je einem Endlageninitiator, zwei Förderrichtungen mit je zwei redundanten Endlageninitiatoren, zwei Förderrichtungen mit je einem Endlageninitiator und je einem Initiator für eine Schnell/Langsam-Umschaltung oder zwei Förderrichtungen mit je zwei Endlageninitiatoren und je zwei Initiatoren für eine Schnell/Langsam-Umschaltung.

Bisher ist, um den Transport eines passiven Fördergutes über ein derartiges Fördersystem zu steuern, für die jeweilige Steuerung einer spezifischen Fördereinrichtung jeweils ein spezieller Steuerbaustein notwendig.

Diese Steuerbausteine können z.B. in einer SPS (Speicher Programmierbaren Steuerung) als Software (teil) programme, in Art eines Netzwerkes und/oder gegebenenfalls auch als Hardwaremodule ausgeführt sein. In der Regel stellen derartige Steuerbausteine mehr oder weniger vereinheitlichte Teile einer Steuerungssoftware bereit. Unabhängig von der Ausführung ist im Nachfolgenden nur noch von Steuerbausteinen die Rede.

Da ferner üblicherweise jeweils eine Fördereinrichtung das Fördergut aktiv abgibt, während die nachfolgende Fördereinrichtung dieses aktiv annimmt, ist hierdurch zwangsläufig eine Verschaltung der für die Steuerung der Fördereinrichtungen jeweils zuständigen Steuerbausteine bedingt. Folglich sind die jeweils einzusetzenden Steuerbausteine bisher nicht nur basierend auf spezifischen Eigenschaften der Fördereinrichtungen in Bezug auf deren jeweiligen Typ und Ausführung aufgebaut, sondern darüber hinaus basierend auf spezifischen Eigenschaften der Fördereinrichtungen in Bezug auf der innerhalb der Förderstrecke wahrzunehmenden Funktionen.

Die Steuerbausteine weisen in herkömmlichen Lösungen folglich eine große Vielfalt auf. Zusätzlich ist noch zu berücksichtigen, dass alle Fördereinrichtungen ferner mit Antrieben verbunden sein müssen, die auch von verschiedenen Herstellern sein können, welches die Anzahl von unterschiedlichen Steuerbausteinvarianten je Fördereinrichtung weiter erhöht. Oftmals verwenden schließlich unterschiedliche Anlagenhersteller jeweils noch zusätzlich ihre eigenen Steuerbausteine.

Insgesamt muss bei Fördersystemen mit gattungsbildenden, aktiv fördernden Fördereinrichtungen folglich eine überaus große Variantenvielfalt von notwendigen Steuerbausteinen je Fördereinrichtung berücksichtigt werden.

Dies führt zwangsweise zu einem sehr komplexen Fördersystem. So muss bei der Inbetriebnahme für eine jeweilige Fördereinrichtung innerhalb der Förderstrecke der richtige Steuerbaustein, häufig aus Hunderten von verschiedenen Steuerbausteinen, herausgesucht werden und dieser korrekt mit den Steuerbausteinen der Nachbar-Fördereinrichtungen verschaltet werden. Dies ist sehr langwierig und fehleranfällig.

Nach Inbetriebnahme heißt das häufig zusätzlich für den Endanwender, dass er sich im Fehlerfall zunächst das Innenleben eines oder mehrerer Steuerbausteine ansehen und verstehen muss, um sich dann mögliche Fehlerbehebungen auszudenken. Auch dies ist sehr zeit- und folglich kostenintensiv.

Eine Aufgabe der Erfindung ist es somit, der großen Variantenvielfalt von zu berücksichtigenden Steuerbausteinen bei Fördersystemen, bei denen jeweilige Fördereinrichtungen fest montiert sind und aktiv fördern, während das Fördergut, passiv bleibt und keinerlei Antrieb oder Intelligenz besitzt, effektiv entgegenzuwirken, um diese Fördersysteme zu vereinfachen und damit einhergehende Handhabungsprozesse, wie insbesondere eine Inbetriebnahme oder Fehlersuche bzw. -behebung zu verkürzen.

Erfindungsgemäße Lösungen der Aufgabe sind durch ein Fördersystem mit den Merkmalen des Anspruchs 1 sowie durch einen Steuerbaustein mit den Merkmalen des Anspruchs 9 gegeben. Vorteilhafte und/oder bevorzugte Ausführungsformen und Weiterbildungen sind Gegenstand der abhängigen Ansprüche.

Die Erfindung schlägt folglich ein Fördersystem vor, welches eine Förderstrecke aus wenigstens zwei aufeinanderfolgend angeordneten Fördereinrichtungen zum aktiven Fördern von passivem Fördergut entlang der Förderstrecke aufweist, wobei jede der Fördereinrichtungen wenigstens zwei relativ zueinander bewegliche Teileinheiten umfasst und wobei jeweils eine der Teileinheiten ortsfest montiert ist und jeweils ein Antrieb zum Bewegen der wenigstens einen weiteren Teileinheit vorgesehen ist. Das Fördersystem umfasst ferner eine mit den Fördereinrichtungen in Verbindung stehende Steuerungseinrichtung zum Steuern der Fördereinrichtungen in Abhängigkeit von entlang der Förderstrecke zu förderndem Fördergut, wobei die Steuerungseinrichtung zum Steuern jeder Fördereinrichtung einen dieser Fördereinrichtung zugeordneten und mit dieser in Verbindung stehenden Steuerbaustein umfasst, der mit wenigstens einem weiteren Steuerbaustein zum Datenaustausch verschaltet ist, welcher einer unmittelbar vorausgehenden oder unmittelbar nachgehenden Fördereinrichtung zugeordnet ist. Jeder Steuerbaustein weist ferner eine Standardschnittstelle mit einer Anzahl, von vordefinierten Schnittstellenpositionen auf, wobei die Schnittstellenpositionen einer Datenverarbeitung des Steuerbausteins zur Steuerung einer Fördereinrichtung fest zugeordnet sind, und wobei die Zuordnung zwischen einem Steuerbaustein und einer spezifischen Fördereinrichtung durch Übergabe eines fördereinrichtungspezifischen Parametersatzes an den Steuerbaustein erfolgt.

Ein wesentlicher Vorteil ist somit darin zu sehen, dass nur noch ein einheitlicher Steuerbaustein pro Fördereinrichtung unabhängig von deren spezifischer Ausführung und Anordnung benötigt wird, je nach Komplexität der internen Datenverarbeitung des Steuerbausteins sogar nur ein einheitlicher Steuerbaustein für eine Anzahl von unterschiedlichen Fördereinrichtungstypen. Erst durch Parametrierung des Steuerbausteins erfolgt die Zuordnung zu einer spezifischen Fördereinrichtung und in Folge die Definition der spezifischen Funktion des Steuerbausteins.

Umfasst darüber hinaus jeder Steuerbaustein an dessen Schnittstelle vorbestimmte Schnittstellenpositionen zum jeweiligen Datenaustausch mit wenigstens einem weiteren Steuerbaustein, kann über das einheitliche Schnittstellenprofil ferner eine Verschaltung zwischen Steuerbausteinen gemäß physikalischem Aufbau der Anlage erfolgen. Darüber hinaus gewährleistet eine solche Schnittstelle mit vordefinierten und einer internen Datenverarbeitung des Steuerbausteins fest zugeordneten Schnittstellenpositionen zum Datenaustausch ferner ein einheitliches Schnittstellenprofil, welches die Kommunikation zwischen den Steuerbausteinen vereinfacht.

Ist in bevorzugter Weiterbildung jeder Steuerbaustein bzw. jede Datenverarbeitung eines Steuerbausteins zum Generieren wenigstens eines universellen Signals angepasst, das einen Betriebsstatus der jeweils zugeordneten Fördereinrichtung innerhalb der Förderstrecke repräsentiert, sowie zum Austauschen derartiger universeller Signale mit wenigstens einem weiteren Steuerbaustein und Verarbeiten derartiger, von einem weiteren Steuerbaustein erhaltenen universeller Signale ist mittels derartiger universeller Signale über das einheitliche Schnittstellenprofil darüber hinaus eine zusätzliche wesentliche Vereinfachung der Kommunikation zwischen den Bausteinen gewährleistet. Infolge der universellen Signale können alle relevanten Informationen zum Zusammenwirken von benachbarten Steuerbausteinen untereinander ausgetauscht und steuerungstechnisch für die jeweilige Funktion der zugeordneten Fördereinrichtungen eingesetzt werden. Ein jeweiliger Steuerbaustein wird somit in seiner Funktion innerhalb der Förderstrecke definiert und zwar unabhängig davon, mit welchen spezifischen Vorgänger- und/oder Nachfolgereinheiten er funktionell zusammenwirken muss und auf welche Art und Weise die Generierung solcher Informationen erfolgt.

Die Erfindung ermöglicht somit ein äußerst einfaches und flexibles modulares Anordnen einzelner Fördereinrichtungen des Fördersystems, wobei ein und der gleiche Steuerbaustein bei unterschiedlichen Variationen einsetzbar ist.

In weiterer bevorzugter weiterbildung umfasst das erfindungsgemäße Fördersystem ferner Steuerbausteine, die an deren Standardschnittstellen ferner vorbestimmte Schnittstellenpositionen zum Anschalten von und Kommunikation mit einem Treiberbaustein aufweisen, der mit einer Antriebssteuerung, wie z.B. einem Motorschalter, Drehzahlsteller usw., verschaltet ist, welche wiederum mit dem mit der jeweils zugeordneten Fördereinrichtung gekoppelten Antrieb verschaltet ist.

Hierdurch können unterschiedliche Antriebe zu im Wesentlichen jedem Zeitpunkt auf einfache Weise an die standardisierten Steuerbausteine angeschaltet und mit diesen kombiniert werden.

Für eine einfache Überwachung und Bedienung des Fördersystems und/oder eine einfache Fehlersuche, umfasst das erfindungsgemäße Fördersystem in weiterer bevorzugter Ausführung ferner eine mit der Steuereinrichtung verbundene Anzeigeeinrichtung zur Visualisierung von Statusinformationen jeweiliger Fördereinrichtungen basierend auf von vordefinierten Schnittstellenpositionen der Steuerbausteine übernommenen Daten.

In weiterer zweckmäßiger Weiterbildung ist hierbei ferner ein visualisierungsassistent eingebunden, der die Daten übernimmt, eine Bedien-/Anzeigeoberfläche der Anzeigerinrichtung entsprechend der übernommenen Daten erzeugt und automatisch die Datenverknüpfung herstellt.

In einer zweckmäßigen Ausbildung der Erfindung, sind die Fördereinrichtungen des Fördersystems SKID-Fördereinrichtungen.

Von Vorteil ist ferner, dass die Steuerbausteine für das Fördersystem grundsätzlich aus Software und/oder Hardware aufgebaut sein können. Auch können die Steuerbausteine ein Netzwerk bilden. Systemspezifisch können die Standardschnittstellen folglich über physische Anschlussstellen zum Anschließen von Datenleitungen und/oder über vordefinierte Positionen innerhalb eines Datenübertragungsprotokolls bereitgestellt werden. Eine vordefinierte Position kann zweckmäßig ferner auch über in einem Protokoll enthaltene Zeiger oder andere Marker vordefiniert sein, so dass z.B. ein eingebundener Visualisierungsassistent die entsprechenden Daten an diesen Positionen ausliest.

Die Erfindung schlägt ferner einen an ein vorstehend diskutiertes Fördersystem angepassten Steuerbaustein vor, der eine Standardschnittstelle mit einer Anzahl von vordefinierten Schnittstellenpositionen aufweist, wobei die Schnittstellenpositionen einer Datenverarbeitung des Steuerbausteins zur Steuerung einer Fördereinrichtung fest zugeordnet sind, und der erst durch einen fördereinrichtungspezifischen Parametersatz einer spezifischen Fördereinrichtung zuordenbar ist.

Wesentliche Vorteile sind somit darin zu sehen, dass ein einheitlicher Steuerbaustein unabhängig von spezifischen Ausführungen und Anordnungen von Fördereinrichtungen und folglich flexibel einsetzbar ist. Erst durch Parametrierung des Steuerbausteins erfolgt die Zuordnung zu einer spezifischen Fördereinrichtung und in Folge die Definition der spezifischen Funktion des Steuerbausteins.

Die weiteren zweckmäßigen Ausführungsformen des erfindungsgemäßen Steuerbausteins bewirken zu den vorstehend aufgezeigten Vorteilen im Wesentlichen entsprechende Vorteile.

Insgesamt schlägt die Erfindung somit den Einsatz von standardisierten Steuerbausteinen für die Bereitstellung eines Fördersystems, welches eine Förderstrecke aus wenigstens zwei aufeinanderfolgend angeordneten Fördereinrichtungen zum aktiven Fördern von passivem Fördergut entlang der Förderstrecke aufweist, vor, die erst in Abhängigkeit der jeweils spezifischen Ausführung und Anordnung einer bestimmten Fördereinrichtung parametriert werden. Ferner erfolgt eine Kommunikation zwischen den Steuerbausteinen über eindeutige, definierte Signale und die Antriebsteuerungen der Fördereinrichtungen können über zusätzliche Treiberbausteine mit den standardisierten Steuerbausteinen auf einfache weise kombiniert werden.

Die Erfindung wird nachfolgend anhand eines Ausführungsbeispiels unter Bezugnahme auf die beigefügten Zeichnungen detaillierter beschrieben. In den Zeichnungen zeigen:
Fig. 1 eine schematische Darstellung einer möglichen modularen Aneinanderreihung von Fördereinrichtungen,
Fig. 2 zwei schematische Darstellungen weiterer modularer Aneinanderreihungen von Fördereinrichtungen,
Fig. 3 eine schematische Darstellung einer Verschaltung von erfindungsgemäßen Steuerbausteinen mit jeweils einem zusätzlich angeschalteten Treiberbaustein für einen motorischen Antrieb,
Fig. 4 eine schematische Darstellung der Signalwege und Signalflüsse von erfindungsgemäß zusammenwirkenden Steuerbausteinen,
Fig. 5 eine schematische Darstellung eines beispielhaften Schnittstellenprofils zur Parametrisierung eines Steuerbausteins für eine Rollenbahn, und
Fig. 6 eine schematische Darstellung der Anzeige eines Symbols eines konfigurierten und parametrierten Steuerbausteins nach Fig. 5 an einem Fördersystem-Bedienpult.

Zweckmäßige jedoch lediglich beispielhafte Ausführungen der Erfindung werden nachfolgend grundsätzlich an Hand der Skidfördertechnik näher beschrieben. Es sei jedoch darauf hingewiesen, dass das Erfindungskonzept auf im Wesentlichen alle Fördertechniken anwendbar ist, bei denen ein Fördersystem eine aus einzelnen Fördereinrichtungen aufgebaute Förderstrecke umfasst, wobei die Fördereinrichtungen fest montiert sind und aktiv fördern, während das Fördergut, wie z. B. ein Skid mit Ladung, passiv bleibt und keinerlei Antrieb oder Intelligenz besitzt. So können derartige Fördersysteme neben der Skidfördertechnik z.B. auch Rollenförderer für den Transport von Kisten oder Kartons in Hochregallagern einsetzen.

Bei der SKID-Fördertechnik umfassen solche fest montierten und aktiv fördern Fördereineinrichtungen, welche folglich jeweils wenigstens zwei relativ zueinander bewegliche Teileinheiten aufweisen, wobei jeweils eine der Teileinheiten ortsfest montiert ist und ein Antrieb zum Bewegen der jeweils wenigstens einen weiteren Teileinheit vorgesehen ist, insbesondere verschiedene Ausführungsformen von Rollenbahnen, Drehtischen und Hubtischen.

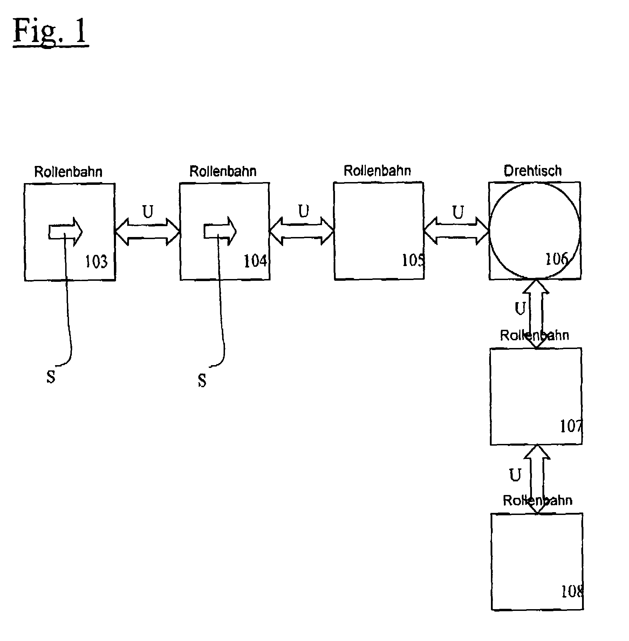

Diese Fördereinrichtungen sind weitestgehend standardisiert, so dass eine Förderstrecke eines Fördersystems nach dem Baukastenprinzip aufgebaut werden kann. In Fig. 1 ist mögliche Anordnung von Fördereinrichtungen stark vereinfacht dargestellt, welche aus drei aufeinanderfolgend angeordneten Rollenbahnen 103, 104 und 105, einem anschließenden Drehtisch 106 und drei weiteren aufeinanderfolgend angeordneten Rollenbahnen 107 und 108 aufgebaut ist. Grundsätzlich erhält jede Fördereinrichtung eine eindeutige Bezeichnung, die einzigartig ist. Die mit "S" gekennzeichneten Pfeile repräsentiert eine Standardförderrichtung eines bei Fig. 1 nicht gezeigten, zu fördernden Förderguts. Aufgrund der ortsfesten Grundmontage der Fördereinrichtungen muss das Fördergut entlang der Förderstrecke von einer Fördereinrichtung an die nächste übergeben werden bzw. von einer vorhergehenden übernommen werden, wie mit den mit dem Bezugszeichen "U" gekennzeichneten Doppelpfeilen bei Fig. 1 angezeigt. Folglich ist es notwendig, dass bei den meisten Fördervorgängen zwei Fördereinrichtungen gleichzeitig zusammen arbeiten. Die Fördereinrichtungen sind hierzu häufig auch mechanisch gekoppelt.

Zur Steuerung der Fördervorgänge umfasst das Fördersystem somit eine, in den Figuren nicht dargestellte Steuerungseinrichtung, die mit den Fördereinrichtungen in Verbindung steht und die Fördereinrichtungen in Abhängigkeit von entlang der Förderstrecke zu förderndem Fördergut steuert.

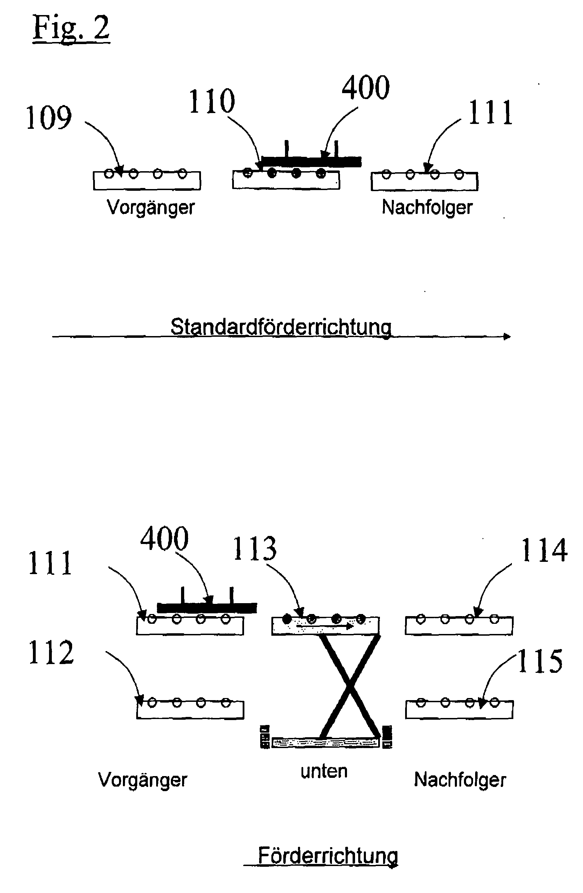

Eine solche Abhängigkeit ist z.B. auch der Fig. 2 zu entnehmen, welche zwei weitere schematische Darstellungen von modularen Aneinanderreihungen von Fördereinrichtungen zeigt.

Bei der oberen Darstellung der Fig 2. sind wiederum drei aufeinanderfolgende Rollenbahnen 109, 110 und 111 einer Förderstrecke gezeigt, wobei die mittlere Rollenbahn 110 mit einem Fördergut 400 belegt ist. Abgesehen davon, dass ein Fördern zweckmäßiger Weise erst aktivierbar ist, wenn der Status in Bezug auf die Betriebsart der Rollenbahnen 109, 110 und 111 insgesamt fehlerfrei ist, gilt in Bezug auf die Einschaltbedingung für die mittlere Rollenbahn 110 zum Ausfördern des Förderguts 400 für dessen Übergabe an die nachfolgende Rollenbahn 111 folgendes. Die beweglichen Rollen der Rollenbahn 110 dürfen zum Ausfördern erst für ein Fördern in Richtung der Standardförderichtung angetrieben werden, wenn die Rollenbahn 110 mit Fördergut 400 belegt ist und der Nachfolger 111 nicht belegt ist und ebenfalls in die gleiche Richtung fördert. In Bezug auf die Einschaltbedingung für die mittlere Rollenbahn 110 zum Einfördern, d.h. zur Übernahme von Fördergut, darf die mittlere Rollenbahn 110 hingegen nur einfördern, wenn die Rollenbahn 110 nicht belegt ist und der Vorgänger 109 belegt ist.

Ist in abgewandelter oder weiterführender Anordnung z.B., wie bei der unteren Darstellung der Fig 2., ein Hubtisch 113, z.B. in Art eines Scherenhubtisches zwischen Rollenbahnen 111, 112, 114, 115 angeordnet gelten zumindest teilweise andere Einschaltbedingungen. Die Rollenbahn 111, die z.B. gemäß der oberen Darstellung der Fig. 2 Nachfolger der Rollenbahn 110 ist, ist hierbei in Bezug auf deren Nachfolger, den Hubtisch 113 in einer oberen Ebene angeordnet, ebenso wie die Rollenbahnen 114. Die beiden weiteren, dem Hubtisch 113 vorgelagerten und nachgelagerten Rollenbahnen 112 und 115 befinden sich hingegen in einer unteren Ebene. Als Einschaltbedingung zum Ausfördern für die Rollenbahn 111 auf den Hubtisch 113 gilt dann beispielsweise, dass die Rollenbahn 111 erst fördern darf, wenn die Rollenbahn 111 belegt ist und der Nachfolger, also der Hubtisch 113, nicht belegt ist, vorwärts fördert und ferner in der oberen Position ist. Entsprechend sind Einschaltbedingungen zum Einfördern für die Rollenbahn 115, dass die Rollenbahn 115 erst fördern darf, wenn die Rollenbahn 115 nicht belegt ist und der Hubtisch 113 belegt ist und in der unteren Position ist.

Folglich müssen die Fördereinrichtung auch untereinander steuerungstechnisch gekoppelt sein, da eben an vielen Fördervorgängen zwei Fördereinrichtung beteiligt sind.
Die Steuereinrichtung umfasst hierzu zur Steuerung einer jeweiligen Fördereinrichtung jeweils einen dieser zugeordneten und mit dieser in Verbindung stehenden Steuerbaustein, der mit wenigstens einem weiteren Steuerbaustein zum Datenaustausch verschaltet ist, welcher einer unmittelbar vorausgehenden oder unmittelbar nachgehenden Fördereinrichtung zugeordnet ist.

Während bisher bei voneinander abweichenden modularen Anordnungen ein und der selben Hardwareausführung einer Fördereinrichtung eine Anpassung der Schnittstellen des für diese Fördereinrichtung zuständigen Steuerbausteins durch Variantenbildung erfolgte, um z.B. durch Modifikation des Steuerbausteins die Tatsache zu berücksichtigen, dass, die einer Rollenbahn 110 nachfolgende Einrichtung in einer ersten Anordnung ebenfalls eine Rollenbahn 111 ist (obere Darstellung der Fig. 2) während die der Rollenbahn 111 nachfolgende Einrichtung in einer abgewandelten Anordnung ein Scherenhubtisch 113 ist (untere Darstellung der Fig. 2), der besonders betrachtet werden musste und für ein und die gleichen Ausführungen von Fördereinrichtungen, je nach Vorgängertyp und/oder Nachfolgertyp, unterschiedliche Steuerbausteine zur Folge hatte.

Einen wesentlicher Bestandteil des erfindungsgemäßen Fördersystems und des diesem zugrunde liegenden Konzepts bilden folglich die Steuerbausteine, welche als Software-Programm, Hardwareausführung oder in einer Mischform als Teil der Steuerungseinrichtung eingebunden werden und z.B. auch ein Netzwerk bilden können, sowie die Schnittstellen der Steuerbausteine, einschließlich zur Kommunikation untereinander und zu Teilen der Antriebstechnik.

Für die steuerungstechnische Verschaltung der Steuerbausteine wird eine definierte Schnittstelle bereitgestellt, die z.B. programmtechnisch als WORD ausgeführt sein kann, die es ermöglicht, alle Steuerbausteine durch simples Verbinden dieser Schnittstellen in Ihrer Funktion untereinander zu definieren. In dieser Schnittstelle sind alle relevanten Informationen an definierten Stellen oder Positionen abgelegt und bilden somit quasi ein Profil. Die Steuerbausteine erhalten zweckmäßig alle Profile ihrer Nachbarelemente und wissen, an welchen Stellen im Profil sie die notwendigen Informationen finden und wie sie damit umzugehen haben. Eine das Fördersystem in Betrieb nehmende Bedienperson, z.B. eine Programmierer, wird von diesen Aufgaben vollständig entlastet, da die Steuerbausteine wie Legosteine zusammengeschaltet werden können.

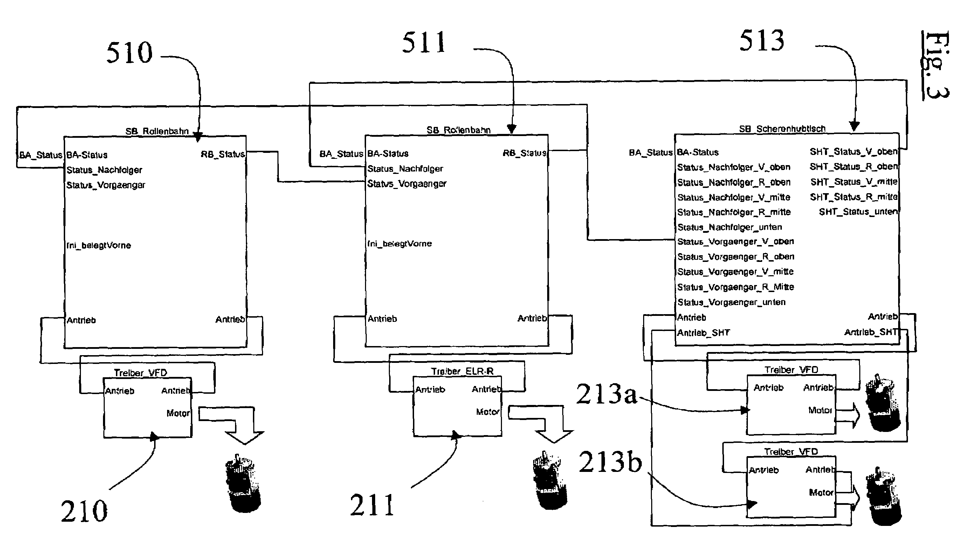

Hierzu ist, insbesondere unter Bezugnahme auf Fig. 3, bevorzugt vorgesehen, dass ein universelles Signal oder Statuswort die Kommunikation übernimmt.

Jeder Steuerbaustein 510, 511 und 513 (Fig. 3) stellt an dessen Schnittstelle ein z.B. Freigabebit zur Verfügung, dass zweckmäßig bereits in diesem universellen Statuswort enthalten ist und das der jeweils vorgehend und/oder nachfolgend angeschlossenen Fördereinrichtung das Fördern erst erlaubt. Die angeschlossene Fördereinrichtung muss sich folglich nicht mehr darum kümmern, wie dieses Freigabebit gebildet wird, wodurch insgesamt die Modifikationen der einzelnen Steuerbausteine gemäß Stand der Technik entfallen.

Wie bei Fig. 3 in stark schematisierter Weise dargestellt, ist somit an einer Schnittstellenposition, bei Fig. 3 jeweils mit "BA-Status" bezeichnet, eines jeweiligen Steuerbausteins 510, 511, 513 für eine (vorgehende) Rollenbahn, eine mittlere Rollenbahn bzw. einen (nachfolgenden) Scherenhubtisch, im vorliegenden Beispiel die Rollenbahn 110, die Rollenbahn 111 und der Scherenhubtisch 113 der Fig. 2, ein mit "BA-Status" bezeichnetes Signal angelegt, über welches ein fördereinrichtungsspezifischer Parametersatz an den Steuerbaustein übergeben wird, der für ein Teilstück der Förderstrecke gültig sein kann, und die jeweilige Betriebsart vorgibt.

Ferner ist die Schnittstellenposition "Status_Nachfolger" des Steuerbausteins 510 mit der Schnittstellenposition "RB_Status" des Steuerbausteins 511 verbunden und die Schnittstellenposition "RB_Status" des Steuerbausteins 510 mit der Schnittstellenposition "Status_Vorgänger" des Steuerbausteins 511. In entsprechender Weise ist die Schnittstellenposition "Status_Nachfolger" des Steuerbausteins 511 mit der Schnittstellenposition "SHT_Status_V_oben" des Steuerbausteins 513 verbunden und die Schnittstellenposition "RB_Status" des Steuerbausteins 511 mit der Schnittstellenposition "Status_Vorgänger_V_oben" des Steuerbausteins 513. Eine dem Steuerbaustein 511 zugewiesene Rollenbahn 111 ist folglich in Bezug auf den dem Steuerbaustein 513 zugeordneten Scherenhubtisch 113 auf einer oberen Ebene angeordnet.

Die Datenverarbeitung jedes Steuerbausteins ist folglich zum Generieren eines universellen Status-Signals angepasst, das einen Betriebsstatus der jeweils zugeordneten Fördereinrichtung innerhalb der Förderstrecke repräsentiert, sowie zum Austauschen derartiger universeller Signale mit wenigstens einem weiteren Steuerbaustein und Verarbeiten derartiger, von einem weiteren Steuerbaustein erhaltenen universeller Signale.

Ist z.B. der dem Steuerbaustein 513 zugeordnete Scherenhubtisch 113 nicht belegt und befindet sich in der oberen Position, generiert der Steuerbaustein 513 das entsprechende Status-Signal zur Freigabe und der Steuerbaustein 511 erhält aufgrund der Verbindungen der entsprechenden Schnittstellenposition von seinem Nachfolger 513 die Freigabe zum Ausfördern. Da dieses Signal der definierten Schnittstellenposition "Status_Nachfolger" des Steuerbausteins 511 zugeführt wird, kann der Steuerbaustein 511 das Signal bzw. die im Signal enthaltene Information unmittelbar verarbeiten, ohne sich darum kümmern zu müssen, wie dieses Signal gebildet wird. Der Steuerbaustein 511 generiert, wenn die diesem zugeordnete Rollenbahn 111 belegt ist, entsprechende Freigabesignale, die an festen Schnittstellenpositionen des Kommunikationsprofils ausgegeben werden, bei Fig. 3 mit "RB-Status" bezeichnet, die dem Steuerbaustein 513 über dessen definierte Schnittstellenposition "Status_Vorgänger_V_oben" zugeführt werden und die Freigabe des Förderungsvorgangs für den Steuerbaustein 513 erteilen. Folglich erkennt der Steuerbaustein 513 aus dem Status-Signal entsprechende Freigabesignale zum Einfördern von Fördergut von dem entsprechend angeordneten oberen Vorgänger und kann es entsprechend zur Steuerung weiterverarbeiten, ohne sich darum kümmern zu müssen, wie dieses Signal gebildet wird.

Darüber hinaus weisen die standardisierten Schnittstellen der Steuerbausteine 510, 511 und 513 jeweils vordefinierte Schnittstellenposition "Antrieb" oder auch "Antrieb_SHT" auf, welche somit ein weiteres Kommunikationsprofil ausbilden, über welches jeweils ein Treiberbaustein 210, 211, 213a bzw. 213b, der mit der mit der jeweils zugeordneten Fördereinrichtung gekoppelten Antriebsansteuerung verschaltet ist, angeschlossen wird. Auf diese Weise ist auch das Kombinieren unterschiedlicher Antriebsansteuerungen mit den standardisierten Steuerbausteinen auf einfachste weise möglich.

Die Schnittstellenpositionen "Antrieb" des Profils sind hierbei in Bezug auf die Datenverarbeitung im Wesentlichen der Förderrichtung fest zugeordnet und die Schnittstellenposition "Antrieb_SHT" der Hebe- und Senkbewegung des Scherenhubtisches.

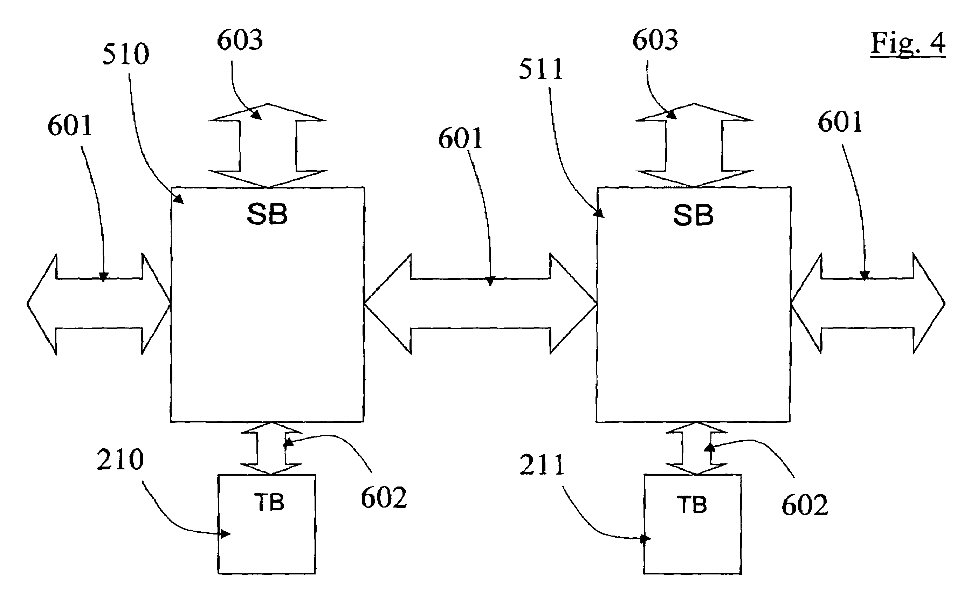

Unter Anwendung der Erfindung folgen Kommunikationswege und -flüsse gemäß Fig. 4, bei welcher in stark vereinfachter Weise zwei modular aneinandergereihte Steuerbausteine 510 und 511 schematisch dargestellt sind, wobei mit jedem der Steuerbausteine 510 und 511 jeweils ein Treiberbaustein 210 bzw. 211 zum Anschalten eines motorischen Antriebs über das Schnittstellenprofil verbunden ist. Nach einer Grundkonfiguration und Parametrierung der Steuerbausteine, wie nachfolgend anhand eines Beispiels noch einmal näher beschrieben wird, tauschen die Steuerbausteine 510 und 511 und die Treiberbausteine 210 und 211 über die Signalwege 601 und 602 somit folgende Daten und Informationen aus. Über die Signalwege 601 werden die jeweiligen Stati zwischen dem jeweils vorgeschalteten und dem jeweils nachgeschalteten Steuerbaustein 510 bzw. 511 ausgetauscht. Über die Signalpfade 602 werden die Antriebsbefehle und Rückmeldungen zwischen einem jeweiligen Steuerbaustein 510 oder 511 und dem jeweils zugeordneten Treiberbaustein 210 bzw. 211 übertragen. Die Signalwege 603 sind zu/von einem Bedienpult geführt, so dass hierüber eine Übergabe fördereinrichtungsspezifischer Parameter erfolgt und zweckmäßig eine Auswahl von an einer Anzeige anzuzeigenden, verschiedene fördereinrichtungsspezifische Funktionen repräsentierenden Symbolen durchführbar ist, die z.B. die Anzeige eines Elementstatus, bestimmter Fehlermeldungen und Motorströme und/oder Motorstromfrequenz einem Bediener eröffnen.

Systemspezifisch können derartige Standardschnittstellen mit vordefinierten Schnittstellenpositionen über physische Anschlussstellen zum Anschließen von Datenleitungen und/oder über vordefinierte Positionen innerhalb eines Datenübertragungsprotokolls bereitgestellt werden. Auch in einem Protokoll enthaltene Zeiger oder andere Marker können solche Positionen vordefinieren.

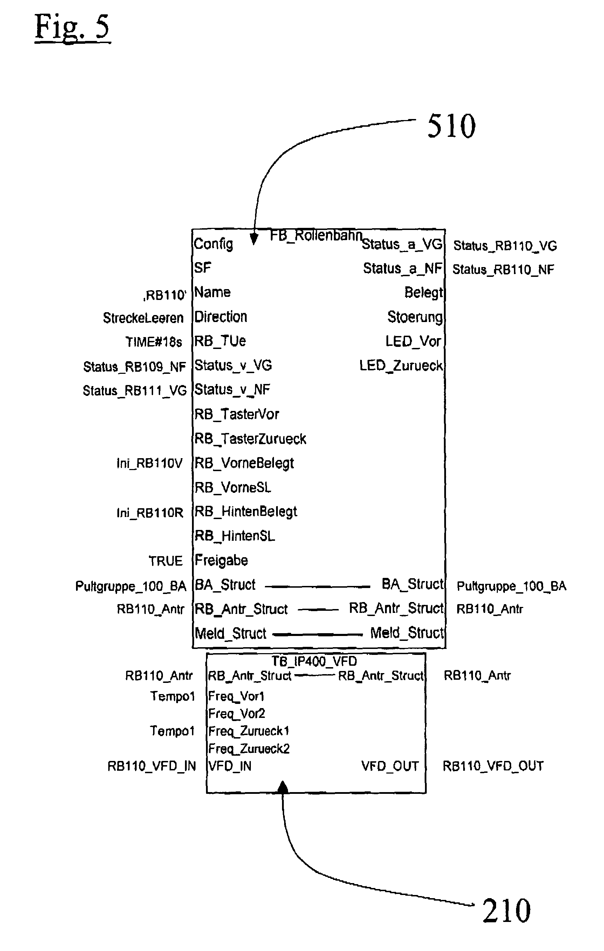

Nachfolgend wird auf Fig. 5 Bezug genommen, welche schematisch eine beispielhafte Standardschnittstelle mit weiteren vordefinierten Schnittstellenpositionen, insbesondere auch zur Parametrisierung eines Steuerbausteins für eine Rollenbahn darstellt.

Der wieder mit dem Bezugszeichen 510 gekennzeichnete Steuerbaustein umfasst eine erste mit "Config" bezeichnete Schnittstellenposition im Schnittstellenprofil, an welchen ein Signal mit darin enthaltenen Parametern angelegt wird, welche den Steuerbaustein z.B. grundlegend zunächst als einen Steuerbaustein für eine Rollenbahn mit zwei Drehrichtungen konfigurieren. Die mit "SF" bezeichnete Schnittstellenposition ist zum Übergeben weitere Parameter vorgesehen, mit welchen eine Standardförderrichtung definiert wird.
An der mit "Name" bezeichneten Schnittstellenposition wird der den spezischen Namen der zugeordneten, zu steuernden Fördereinrichtung repräsentierende Parametersatz, z.B. "RB110" angelegt, welches den Namen der Rollenbahn innerhalb der Förderstrecke des Fördersystem mit "RB 100" festlegt. An einer mit "Direction" bezeichneten Schnittstellenposition ist eine boolsche Variable zur Umkehr der Förderrichtung übergeben, im Beispiel die Variable "StreckeLeeren". An einer mit "RB-TUe" bezeichneten Schnittstellenposition ist ein Zeitwert als Variable oder direkter Wert, im Beispiel "TIME##18s", zur Parametrierung einer Laufzeitüberwachung angelegt. Die mit "Status_v_VG" bezeichnete Schnittstellenposition ist zum Empfangen eines mit "Status_RB109_NF" bezeichneten Status-signals angepasst, welches vom Vorgänger, im vorliegenden Beispiel von einer Rollenbahn mit Namen "RB109", generiert wird, und den Status dieses Vorgängers dem Steuerbaustein 510 übermittelt. Die mit "Status_v_NF" bezeichnete Schnittstellenposition ist zum Übernehmen eines mit "Status_RB111_VG" bezeichneten Status-Signals angelegt, welches vom Nachfolger, im vorliegenden Beispiel von einer Rollenbahn mit Namen "RB111", generiert wird, und den Status dieses Nachfolgers dem Steuerbaustein 510 anzeigt. An mit "RB_TasterVor" und ""RB_TasterZurück" bezeichneten Schnittstellenpositionen können optional bestimmte Parameter zu und/oder von einem herkömmlichen Tastenbedienpult der Fördersystems übergeben werden. An einer mit "RB_VorneBelegt" bezeichneten Schnittstellenposition ist ein mit "Ini_RB110V" bezeichneter Signalweg angelegt, über den ein Initiator für eine vordere Endlage der Rollenbahn angeschlossen ist.
An einer mit "RB_HintenBelegt" bezeichneten Schnittstellenposition ist ein mit "Ini_RB110R" bezeichneter Signalweg angelegt, über den ein Initiator für die hintere Endlage angeschlossen ist.
Über zwei mit "RB_VorneSL" und RB_HintenSL" bezeichnete Schnittstellenpositionen können optional fördereinrichtungsspezifische Parameter für eine Schnell/Langsam-Umschaltung für den vorderen Initiator bzw. hinteren Initiator übergeben werden.
An einer mit "Freigabe" bezeichneten Schnittstellenposition ist ein definierter, mit "TRUE" bezeichneter Freigabeparameter angelegt, mit welchem z.B. die Möglichkeit zur externen Sperrung der Bahn aktivierbar oder deaktiviert ist. An zwei mit "BA_Struct" bezeichneten Schnittstellenpositionen ist jeweils ein mit "Pultgruppe_100_BA" bezeichneter Signalpfad angeschlossen, über welche der Steuerbaustein 510 mit einem zum Übergeben/Austauschen von bestimmten Betriebsartenparametern einer Pultgruppe bestimmten Paramtersatz verbunden ist.
An einer mit "Status_a_VG" bezeichneten Schnittstellenposition wird statusbedingt ein mit "Status_RB100_VG" bezeichnetes, vorstehend beschriebenes Status-Signal, welches den Status der dem Steuerbaustein 510 zugeordneten Rollenbahn repräsentiert, generiert und an den Vorgänger übertragen.
An der mit "Status_a_NF" bezeichneten Schnittstellenposition wird statusbedingt ein mit "Status_RB100_NF" bezeichnetes, vorstehend beschriebenes Status-Signal, welches den Status der dem Steuerbaustein 510 zugeordneten Rollenbahn repräsentiert, generiert und an den Nachfolger übertragen.
An den mit "Belegt", "Stoerung", "LED_Vor" und LED_Zurueck" bezeichneten Schnittstellenpositionen können Status-Bits übergeben werden, die z.B. der Diagnose dienen und gegebenenfalls einem Pult zugeführt werden können.
Über die mit "RB_Antr-Struct" bezeichneten Schnittstellenpositionen des Steuerbausteins 510 ist über mit "RB110_Antr" bezeichnete Signalpfade ein Treiberbaustein 210 über dessen Schnittstellenpositionen "RB_Antr-Struct" angeschlossen, der im vorliegenden Beispiel für einen IP400 VFD (Variable Frequency Drive) als Antriebssteuerung mit Drehzahlsteller ausgelegt ist. Über die mit "Freq-Vor1" und "Freq_Zurueck1" bezeichneten Schnittstellenpositionen des Treiberbausteins 210 können mit den mit "Tempo1" bezeichneten Parametern bestimmte Frequenzen für den Vorwärtsbetrieb bzw. Rückwärtsbetrieb vorgegeben werden. Die mit "Freq-Vor2" und "Freq_zurueck2" bezeichneten Schnittstellenpositionen des Treiberbausteins 210 sind nicht angeschlossen, da im vorliegenden Beispiel die verwendete Hardwareausprägung der am Treiberbaustein 210 angeschlossenen Fördereinrichtung keine Schnell/Langsam-Umschaltung vorsieht, was dem Steuerbaustein 510 durch den an Position "Config" angeschlossenen Parametersatz mitgeteilt ist, so dass der Steuerbaustein 510 dem Treiberbaustein 210 auch keine Langsamschaltung anweisen wird, für die die Positionen "Freq-Vor2" und "Freq_Zurueck2" vorgesehen sind.
An die mit "VFD_IN" und "VFD_OUT" bezeichneten Schnittstellenpositionen des Treiberbausteins 210 sind über die mit "RB110_VFD_IN" bzw. "RB110_VFD_OUT" bezeichneten signalpfade die Prozessdaten für die Antriebssteuerung angeschlossen.

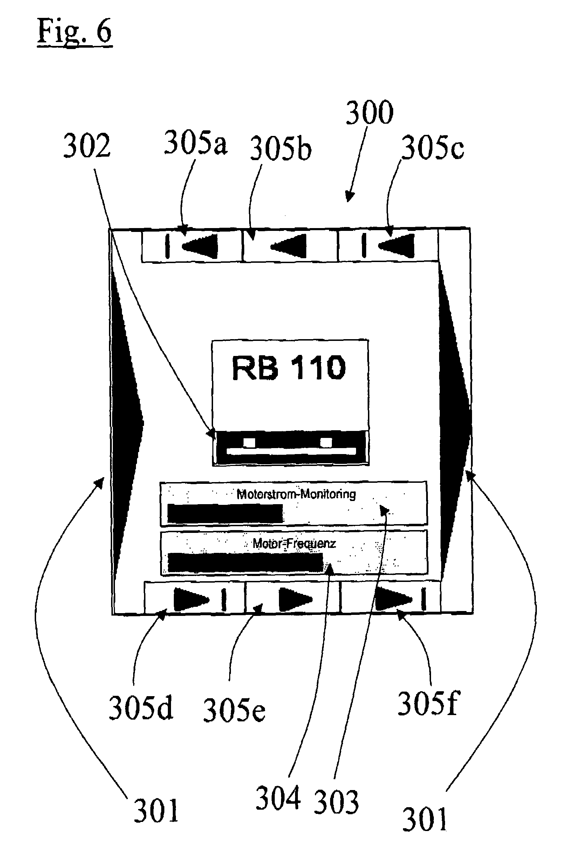

Nach der vollständigen, für die anwendungsspezifische Förderstrecke notwendigen Grundkonfiguration und Parametrierung förderungseinrichtungsspezifischer Größen des Steuerbausteines 510 der Fig. 5 sowie der entsprechenden Verschaltung mit den Vorgänger- und Nachfolger-Steuerbausteinen zum Kommunikationsaustausch, werden die entsprechend vorhandenen Parameter und Daten bevorzugt zusätzlich einer Umsetzeinrichtung zugeführt, welche bestimmte für eine visuelle Anzeige der dem Steuerbaustein 510 zugewiesenen Rollenbahn z.B. gemäß Fig. 6 umsetzt.

Für eine solche Umsetzeinrichtung wird gemäß einer bevorzugten Ausführung ein Visualisierungsassistent eingesetzt, der z.B. Daten aus vordefinierten Positionen eines hierzu verwendeten Protokolls übernimmt, eine Bedien-/Anzeigeoberfläche der Anzeigerinrichtung entsprechend der übernommenen Daten erzeugt und automatisch die Datenverknüpfung herstellt.

Wie bei Fig. 6 dargestellt, umfasst eine solche Anzeige der Einfachheit halber ein Symbol 300, welches für einen Bediener der Förderanlage eine Rollenbahn darstellt, die im vorliegenden Beispiel den Namen "RB110" besitzt, der entsprechend angezeigt wird. Das Rollenbahn-Symbol 300 weist im vorliegenden Beispiel standardmäßig Richtungspfeile 301 auf, die die Standardförderrichtung repräsentieren, also gemäß Fig. 6 nach rechts, sowie ein Untersymbol 302, welches im dargestellten Zustand einen Status, in welchem das Förderelement mit einem Fördergut belegt ist, d.h. einen Belegt-Status des Förderelements, anzeigt. Ferner weist das Symbol 300 im vorliegenden Beispiel, gemäß welchem eine Antriebssteuerung IP400 VFD nach Fig. 5 angeschaltet ist, eine Anzeige 303 für den Motorstrom sowie eine Anzeige 304 für die Motorfrequenz auf.

Darüber hinaus sind Tasten 305a bis 305f eingeblendet, über welche per Handbedienung die Förderrichtung sowie die Förderfunktion manipuliert werden kann. In bevorzugter Weise, ist die jeweils aktuelle Förderichtung und -funktion nochmals visuell hervorgehoben. Im vorliegenden Fall repräsentiert die Taste 305a "Ausfördern rückwärts", die Taste 305b "Fördern rückwärts", die Taste 305c "Einfördern rückwärts", die Taste 305d "Ausfördern vorwärts", die Taste 305e "Fördern vorwärts" und die Taste 305f "Einfördern vorwärts".

Die Erfindung eröffnet somit die Möglichkeit einen einzigen Steuerbaustein durch entsprechende Parametrierung für verschiedene Hardwareausführungen eines Fördereinrichtungstyps einzusetzen. So kann z.B. in Bezug auf eine Rollenbahn förderungseinrichtungsspezifisch der Steuerbaustein für eine Förderrichtung mit einem Endlageninitiator, eine Förderrichtung mit zwei redundanten Endlageninitiatoren, eine Förderrichtung mit einem Endlageninitiator und einem Initiator für Schnell/Langsam-Umschaltung, eine Förderrichtung mit zwei redundanten Endlageninitiatoren und zwei redundanten Initiatoren für Schnell/Langsam-Umschaltung, zwei Förderrichtungen mit je einem Endlageninitiator, zwei Förderrichtungen mit je zwei redundanten Endlageninitiatoren, zwei Förderrichtungen mit je einem Endlageninitiator und je einem Initiator für Schnell/Langsam-Umschaltung oder für zwei Förderrichtungen mit je zwei Endlageninitiatoren und je zwei Initiatoren für Schnell/Langsam-Umschaltung entsprechend parametriert und eingesetzt werden. Ferner können mit dem Steuerbaustein eine Vielzahl verschiedene Antriebsansteuerungen über separate Treiberbausteine kombiniert werden. Darüber hinaus ist ein und der selbe Steuerbaustein auch bei im Wesentlichen allen möglichen Varianten einsetzbar, die sich durch die unterschiedlichen Funktionen der jeweiligen Rollenbahn im Zusammenhang des Fördersystems ergeben.

Das erfindungsgemäße Fördersystem nutzt somit modular aufgebaute Steuerbausteine. Der eigentliche Steuerbaustein einer jeweiligen Fördereinrichtung beherrscht bevorzugt alle Hardwareausführungen. Durch Parametrierung erfährt er, welche Ausführung er bedient. Die Antriebstechnik wird über einen separater Treiberbaustein über ein weiteres Kommunikationsprofil angeschlossen. Dadurch gibt es nur noch einen einzigen Steuerbaustein pro Fördereinrichtung (z. B. Rollenbahn). Je nach Komplexität der internen Datenverarbeitung eines Steuerbausteins, ist dieser sogar für eine Anzahl von unterschiedlichen Fördereinrichtungstypen einsetzbar. Ein solcher Steuerbaustein ist in seiner Funktion ausgetestet, was die Wahrscheinlichkeit, dass eine eventuelle Fehlfunktion durch einen Fehler im Steuerbaustein verursacht wurde, auf nahezu Null minimiert.

Der Anlagenerrichter kann seine Anlage schneller einrichten, z.B. programmieren, und wird bei der Inbetriebnahme deutlich schneller sein, weil die Anzahl der Fehler erheblich gemindert wurde. Der Endanwender muss sich dass Innenleben der Steuerbausteine im Fehlerfall nicht mehr anschauen. Die Fehlerquellen sind stark reduziert, was die Verfügbarkeit der Anlage deutlich erhöht.

## Patentansprüche

1. Fördersystem zum Fördern von passivem Fördergut, umfassend eine Förderstrecke aus wenigstens zwei aufeinanderfolgend angeordneten Fördereinrichtungen zum aktiven Fördern des Förderguts entlang der Förderstrecke, wobei jede der Fördereinrichtungen wenigstens zwei relativ zueinander bewegliche Teileinheiten umfasst, wobei jeweils eine der Teileinheiten ortsfest montiert ist und jeweils ein Antrieb zum Bewegen der wenigstens einen weiteren Teileinheit vorgesehen ist,
eine mit den Fördereinrichtungen in Verbindung stehende Steuerungseinrichtung zum Steuern der Fördereinrichtungen in Abhängigkeit von entlang der Förderstrecke zu förderndem Fördergut,
wobei die Steuereinrichtung zum Steuern jeder Fördereinrichtung einen dieser Fördereinrichtung zugeordneten und mit dieser in Verbindung stehenden Steuerbaustein umfasst, der mit wenigstens einem weiteren Steuerbaustein zum Datenaustausch verschaltet ist, welcher einer unmittelbar vorausgehenden oder unmittelbar nachgehenden Fördereinrichtung zugeordnet ist,
**dadurch gekennzeichnet, dass** jeder Steuerbaustein eine Standardschnittstelle mit einer Anzahl von vordefinierten Schnittstellenpositionen aufweist, wobei die Schnittstellenpositionen einer Datenverarbeitung des Steuerbausteins zur Steuerung einer Fördereinrichtung fest zugeordnet sind, und wobei die Zuordnung zwischen einem Steuerbaustein und einer spezifischen Fördereinrichtung durch Übergabe eines fördereinrichtungspezifischen Parametersatzes an den Steuerbaustein erfolgt.

2. Fördersystem nach Anspruch 1, ferner **dadurch gekennzeichnet, dass** jeder Steuerbaustein an dessen Schnittstelle vorbestimmte Schnittstellenpositionen zum jeweiligen Datenaustausch mit wenigstens einem weiteren Steuerbaustein aufweist.

3. Fördersystem nach einem der Ansprüche 1 oder 2, ferner **dadurch gekennzeichnet, dass** jeder Steuerbaustein zum Generieren wenigstens eines universellen Signals angepasst ist, das einen Betriebsstatus der jeweils zugeordneten Fördereinrichtung innerhalb der Förderstrecke repräsentiert, sowie zum Austauschen derartiger universeller Signale mit wenigstens einem weiteren Steuerbaustein und Verarbeiten derartiger, von einem weiteren Steuerbaustein erhaltenen universeller Signale.

4. Fördersystem nach einem der vorstehenden Ansprüche, ferner **dadurch gekennzeichnet, dass** jeder Steuerbaustein an dessen Schnittstelle vorbestimmte Schnittstellenpositionen zum Anschalten eines Treiberbausteins aufweist, der mit der Antriebssteuerung für den mit der zugeordneten Fördereinrichtung gekoppelten Antrieb verschaltet ist.

5. Fördersystem nach einem der vorstehenden Ansprüche, ferner **gekennzeichnet, durch** eine mit der Steuereinrichtung verbundene Anzeigeeinrichtung zur Visualisierung von Statusinformationen jeweiliger Fördereinrichtungen basierend auf von vordefinierten Schnittstellenpositionen der Steuerbausteine übernommenen Daten.

6. Fördersystem nach vorstehendem Anspruch, wobei ein Visualisierungsassistent eingebunden ist, der die Daten übernimmt, eine Bedien-/Anzeigeoberfläche der Anzeigerinrichtung entsprechend der übernommenen Daten erzeugt und automatisch eine Datenverknüpfung herstellt.

7. Fördersystem nach einem der vorstehenden Ansprüche, ferner **dadurch gekennzeichnet, dass** die Fördereinrichtungen SKID-Fördereinrichtungen sind.

8. Fördersystem nach einem der vorstehenden Ansprüche, ferner **dadurch gekennzeichnet, dass** die Steuerbausteine aus Software und/oder Hardware aufgebaut sind.

9. Fördersystem nach einem der vorstehenden Ansprüche, ferner **dadurch gekennzeichnet, dass** die Steuerbausteine ein Netzwerk bilden.

10. Steuerbaustein für ein Fördersystem zum Fördern von passiven Fördergut, welches eine Förderstrecke aus wenigstens zwei aufeinanderfolgend angeordneten Fördereinrichtungen zum aktiven Fördern des Förderguts entlang der Förderstrecke aufweist, wobei jede der Fördereinrichtungen wenigstens zwei relativ zueinander bewegliche Teileinheiten umfasst, wobei jeweils eine der Teileinheiten ortsfest montiert ist und die wenigstens eine weitere Teileinheit mit einem Antrieb zum Bewegen dieser Teileinheit gekoppelt ist,
und wobei das Fördersystem eine mit den Fördereinrichtungen in Verbindung stehende Steuerungseinrichtung zum Steuern der Fördereinrichtungen in Abhängigkeit von entlang der Förderstrecke zu förderndem Fördergut umfasst, und
wobei der Steuerbaustein zum Steuern einer Fördereinrichtung mit dieser als Teil der Steuereinrichtung zu verbinden und zuzuordnen ist und mit wenigstens einem weiteren Steuerbaustein zu verschalten ist, welcher einer unmittelbar vorausgehenden oder nachgehenden Fördereinrichtung zugeordnet ist,
**dadurch gekennzeichnet, dass** der Steuerbaustein eine Standardschnittstelle mit einer Anzahl von vordefinierten Schnittstellenpositionen aufweist, wobei die Schnittstellenpositionen einer Datenverarbeitung des Steuerbausteins zur Steuerung einer Fördereinrichtung fest zugeordnet sind, und der Steuerbaustein erst durch einen fördereinrichtungspezifischen Parametersatz einer spezifischen Fördereinrichtung zuordenbar ist.

11. Steuerbaustein nach Anspruch 10, ferner **dadurch gekennzeichnet, dass** der Steuerbaustein an dessen Schnittstelle fest definierte Schnittstellenpositionen zur jeweiligen Verschaltung von wenigstens zwei solchen Steuerbausteinen aufweist.

12. Steuerbaustein nach einem der Ansprüche 10 oder 11, ferner **dadurch gekennzeichnet, dass** jeder Steuerbaustein zum Generieren wenigstens eines universellen Signals angepasst ist, das einen Betriebsstatus der zugeordneten Fördereinrichtung innerhalb der Förderstrecke repräsentiert, sowie zum Austauschen derartiger universeller Signale mit wenigstens einem weiteren Steuerbaustein und Verarbeiten derartiger, von einem weiteren Steuerbaustein erhaltenen universeller Signale.

13. Steuerbaustein nach einem der vorstehenden Ansprüche 10 bis 12, ferner **dadurch gekennzeichnet, dass** der Steuerbaustein an dessen Schnittstelle fest definierte Schnittstellenpositionen zum Anschalten eines Treiberbausteins für die Antriebssteuerung des mit der zugeordneten Fördereinrichtung gekoppelten Antriebs aufweist.

14. Steuerbaustein nach einem der vorstehenden Ansprüche 10 bis 13, ferner **gekennzeichnet, durch** die Bereitstellung von an der Schnittstelle definiert abgreifbaren Signalen zur Visualisierung vorbestimmter Stautusinformationen einer dem Steuerbaustein zugeordneten Fördereinrichtung.

15. Steuerbaustein nach vorstehendem Anspruch, wobei ein Visualisierungsassistent angebunden ist, der die Daten abgreift, eine Bedien-/Anzeigeoberfläche der Anzeigerinrichtung entsprechend der übernommenen Daten erzeugt und automatisch eine Datenverknüpfung herstellt.

16. Steuerbaustein nach einem der vorstehenden Ansprüche 10 bis 15, ferner **dadurch gekennzeichnet, dass** der Steuerbaustein SKID-Fördereinrichtungen zuzuordnen ist.

17. Steuerbaustein nach einem der vorstehenden Ansprüche 10 bis 16, ferner **dadurch gekennzeichnet, dass** der Steuerbaustein aus Software und/oder Hardware aufgebaut sind.
